# EUROPÄISCHE PATENTANMELDUNG

(11) **EP 2 660 641 A1**
(43) Veröffentlichungstag der Anmeldung: **06.11.2013**
(21) Anmeldenummer: 13002259.3
(22) Anmeldetag: 29.04.2013
(51) Int. Cl.: G02B 21/34, G01N 21/64

(54) **Mikroskopierhilfe**

(30) Priorität: 04.05.2012 AT 1932012
(71) Anmelder: KDG Mediatech AG, 6652 Elbigenalp (AT)
(72) Erfinder: Wörle, Alexander, 6653 Bach (AT)
(74) Vertreter: Gangl, Markus

(57) **Zusammenfassung**

Mikroskopierhilfe für Untersuchungen von Zellen, mit einem plattenförmigen Körper (3) aus einem transparenten Material und mikroskopischen Markierungen (10) zur Kennzeichnung einzelner Bereiche (8) des plattenförmigen Körpers (3) in einer Detailvergrößerung, wobei die Mikroskopierhilfe zusätzlich wenigstens eine makroskopische Markierung (15) zur Orientierung der Mikroskopierhilfe relativ zu einem äußeren Bezugssystem (2) aufweist.

## Beschreibung

Die Erfindung betrifft eine Mikroskopierhilfe für Untersuchungen von Zellen, mit einem plattenförmigen Körper aus einem transparenten Material und mikroskopischen Markierungen zur Kennzeichnung einzelner Bereiche des plattenförmigen Körpers in einer Detailvergrößerung.

Derartige Mikroskopierhilfen sind z.B. aus der DE 3902348 A1 bekannt. Durch die mikroskopischen Markierungen wird ein Nutzer dazu in die Lage versetzt, ein Objekt, das sich auf dem plattenförmigen Körper befindet, auch bei hohen Vergrößerungen ohne Schwierigkeiten routinemäßig wiederzufinden. Das Problem dabei ist jedoch, dass die mikroskopischen Markierungen eben erst unter dem Mikroskop sichtbar werden. Prinzipiell sind aber mehrere Möglichkeiten gegeben, die Mikroskopierhilfe relativ z.B. zu einem Mikroskop auszurichten. Dieser Umstand erschwert das Wiederauffinden eines Objektes auf dem plattenförmigen Körper der Mikroskopierhilfe.

Die der vorliegenden Erfindung zugrunde liegende Aufgabe besteht darin, eine gegenüber dem Stand der Technik verbesserte Mikroskopierhilfe anzugeben, die insbesondere den vorbeschriebenen Nachteil behebt.

Zur Lösung dieser Aufgabe ist es erfindungsgemäß vorgesehen, dass die Mikroskopierhilfe zusätzlich (zu den mikroskopischen Markierungen) wenigstens eine makroskopische Markierung zur Orientierung der Mikroskopierhilfe relativ zu einem äußeren Bezugssystem aufweist. Bei diesem äußeren Bezugssystem kann es sich z.B., wie oben beschrieben, um das Mikroskop selber oder auch um einen Träger handeln, auf dem mehrere Mikroskopierhilfen angeordnet sind. Alternativ zu dem Wort *Orientierung* könnte auch die Begrifflichkeit *räumliche Ausrichtung* verwendet werden.

Eine derartige makroskopische Markierung, die vorzugsweise eine Größe im Millimeter-Bereich aufweist, kann z.B. wenigstens ein alphanumerisches Zeichen und/oder wenigstens eine geometrische Figur umfassen. Die Orientierung der Mikroskopierhilfe mittels einer solchen makroskopischen Markierung kann dadurch erleichtert werden, dass die makroskopische Markierung asymmetrisch ausgebildet ist, sodass ein Nutzer z.B. sofort erkennt ob die "richtige" Seite der Mikroskopierhilfe ihm zu- oder abgewandt ist. Gemäß einer bevorzugten Ausführungsform der Erfindung besteht der plattenförmige Körper im Wesentlichen aus einem transparenten Kunststoff, vorzugsweise aus Polystyrol, Polycarbonat, einem Cyclo-Olefin-Copolymer, wie z.B. Topas-COC, oder Polymethylpenten (Abkürzung: PMP). Daneben können auch andere transparente medizinische Kunststoffe verwendet werden. Die Herstellung des plattenförmigen Körpers aus Kunststoff bietet gleich mehrere Vorzüge z.B. im Vergleich zu der Verwendung von Glas: Es ist möglich, kleinere Strukturen zu schaffen. So können ohne weiteres bei einer gitterförmigen Struktur, die aus rechteckigen und/oder quadratischen Feldern besteht, die Seiten dieser Felder sehr klein gemacht werden, z.B. mit einer Länge von ≤ 250 µm. Des Weiteren ist die Verwendung von Kunststoff sehr viel preisgünstiger.

In diesem Zusammenhang sei erwähnt, dass eine aus Kunststoff gefertigte Mikroskopierhilfe wie folgt hergestellt werden kann: Zunächst wird eine Maske programmiert, die dann mittels eines Elektronenstrahllitographie-Verfahrens auf einen Wafer übertragen wird. Von diesem erstellt man dann einen Nikelabzug, der in weiterer Folge für das eigentliche Spritzgussverfahren zum Einsatz kommt. Ein derartiges Verfahren zur Herstellung der Mikroskopierhilfe sei vom Schutzumfang der vorliegenden Erfindung nicht ausgeschlossen.

Weiterhin hat es sich als vorteilhaft herausgestellt, dass die mikroskopischen Markierungen, die vorzugsweise eine Größe im Mikrometer-Bereich aufweisen, alphanumerische Zeichen und/oder geometrische Figuren umfassen.

Ein weiteres optionales Merkmal besteht darin, dass der plattenförmige Körper einen Mittelpunkt aufweist und dass mittels der mikroskopischen Markierungen ein Bezug zum Mittelpunkt des plattenförmigen Körpers in der Detailvergrößerung herstellbar ist.

Das Merkmal, dass der plattenförmige Körper einen Mittelpunkt aufweist, bedeutet nicht automatisch, dass er - in der Draufsicht betrachtet - kreisförmig ausgebildet ist, obwohl dies gemäß einer bevorzugten Ausführungsform vorgesehen ist. Der plattenförmige Körper kann in der Draufsicht alternativ z.B. auch die Form eines Rechtecks oder eines regelmäßigen Vierecks aufweisen. Der Mittelpunkt derartiger geometrischer Figuren entspricht in diesen Fällen dem Mittelpunkt des Umkreises. Mittels der wenigstens einen mikroskopischen Markierung wird ein Nutzer im Vergleich zum Stand der Technik in vorteilhafter Weise dazu in die Lage versetzt, in der Detailvergrößerung unmittelbar einen Bezug zum Mittelpunkt des plattenförmigen Körpers herzustellen ohne hierzu in signifikantem Umfang die Vergrößerung zu reduzieren.

Umfassen die mikroskopischen Markierungen alphanumerische Zeichen, so kann der Bezug zum Mittelpunkt in einfacher Weise z.B. mittels Polarkoordinaten angegeben werden. Weitere Möglichkeiten, mit Hilfe alphanumerischer Zeichen die Position der einzelnen Bereiche des plattenförmigen Körpers relativ zum Mittelpunkt kenntlich zu machen, werden weiter unten anhand der Figuren beschrieben.

Ein weiteres optionales Merkmal besteht darin, dass die Bereiche des plattenförmigen Körpers in der Form eines Hoch-Tief-Schachbrettes aus vorzugsweise quaderförmigen oder pyramidenstumpfförmigen Erhebungen und dazwischen liegenden ebenen Flächen ausgebildet sind. Mittels dieser Ausführungsform kann in vorteilhafter Weise der Kontrast der gitterförmigen Struktur erhöht werden.

Und schließlich hat es sich als vorteilhaft herausgestellt, wenn wenigstens eine Oberfläche des plattenförmigen Körpers zumindest bereichsweise angeätzt ist. Hierdurch kann die Zellhaftung verbessert werden.

Schutz wird auch begehrt für eine Anordnung, die wenigstens eine erfindungsgemäße Mikroskopierhilfe und einen Träger umfasst, wobei der Träger zumindest bereichsweise aus einem transparenten Material besteht, und wenigstens eine Ausnehmung zur Aufnahme der wenigstens einen Mikroskopierhilfe aufweist. Ein solcher Träger wird häufig auch als Multiwell-Platte bezeichnet. Entsprechend werden die darin angeordneten Mikroskopierhilfen auch als Multiwell-Einsätze bezeichnet. Andere dem Fachmann geläufige Namen sind cell-culture insert, coverslip oder Probenträger.

Alternativ kann es auch vorgesehen sein, dass die Strukturen und Markierungen, die auf den Mikroskopierhilfen angeordnet sind, direkt in die Ausnehmungen des Trägers eingebracht werden, so dass man gänzlich auf die Mikroskopierhilfen verzichten kann.

Weitere vorteilhafte Ausführungsformen der Erfindung sind in den abhängigen Ansprüchen definiert und werden - zusammen mit zusätzlichen Einzelheiten und Vorteilen der Erfindung - im Rahmen der folgenden Figurenbeschreibung anhand der Figuren näher erläutert. Dabei zeigt:
- Fig. 1a und 1b: eine Anordnung aus einem Träger und einer Mikroskopierhilfe, wobei diese Anordnung in der Fig. 1a in der Draufsicht und in der Fig. 1b in einer Querschnittsansicht schematisch dargestellt ist,
- Fig. 2a und 2b: eine Mikroskopierhilfe, ebenfalls in einer schematisch dargestellten Draufsicht und Querschnittsansicht,
- Fig. 3a bis 3d: vier in einer Draufsicht schematisch dargestellte Mikroskopierhilfen mit jeweils einer unterschiedlichen makroskopischen Markierung,
- Fig. 4a und 4b: zwei gitterförmige Strukturen in der Form eines Hoch-Tief-Schachbrettes in schematisch dargestellten perspektivischen Ansichten, und
- Fig. 5 bis 8: fünf unterschiedliche Ausführungsformen der Mikroskopierhilfe in einer schematisch dargestellten Draufsicht.

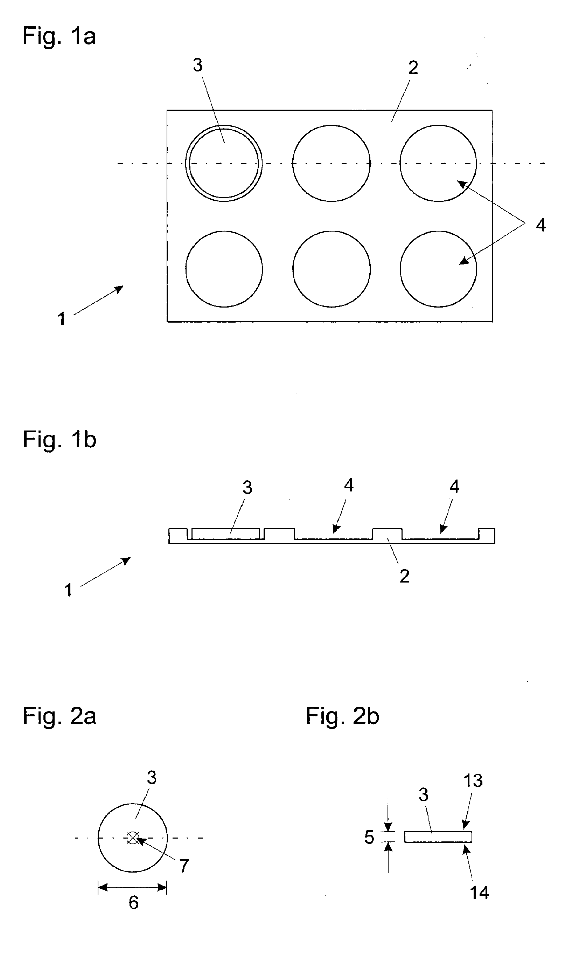

Fig. 1a zeigt in einer schematisch dargestellten Draufsicht eine Anordnung 1 aus einem Träger 2, der aus einem transparenten Material besteht und der sechs zylindrische Ausnehmungen 4 aufweist. Wie bei der Ausnehmung links oben zu sehen ist, dienen diese Ausnehmungen 4 der Aufnahme von jeweils einer Mikroskopierhilfe 3. Dieser Sachverhalt wird auch anhand der Fig. 1 b deutlich, die eine schematisch dargestellte Querschnittsansicht der Anordnung 1 entlang der in der Fig. 1 a eingezeichneten strichpunktierten Linie zeigt. Die Mikroskopierhilfe 3 besteht ebenfalls aus einem transparenten Material, genau gesagt aus einem transparenten Kunststoff. Unter transparenten Materialien seien im Kontext mit der vorliegenden Erfindung Materialen verstanden, die für elektromagnetische Wellen, deren Wellenlängen im sichtbaren Bereich liegen, durchlässig sind.

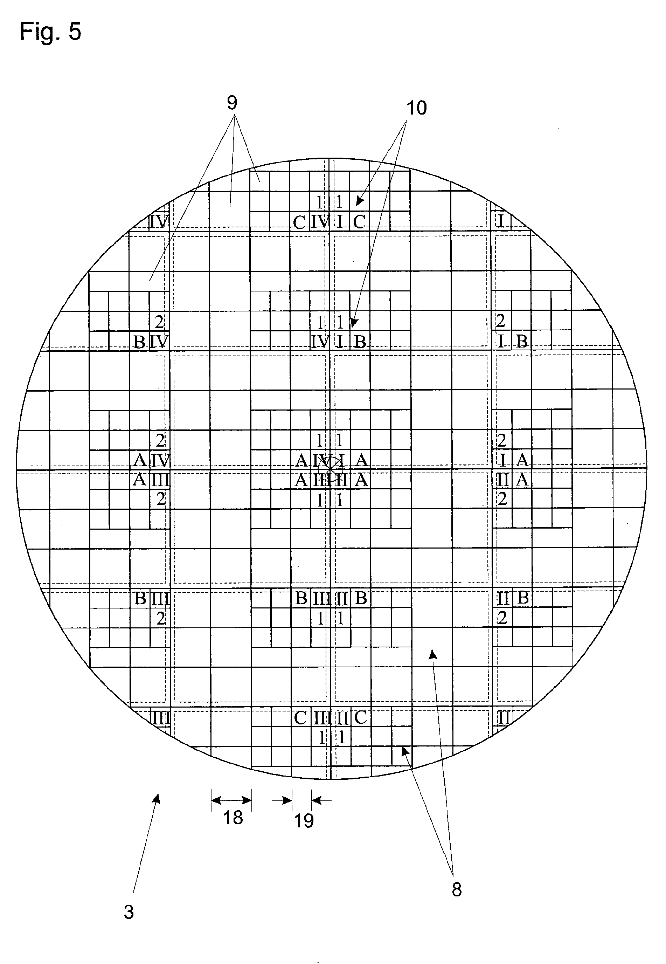

Die Fig. 2a und 2b zeigen, schematisch dargestellt in einer Draufsicht bzw. in einer Querschnittsansicht, eine Mikroskopierhilfe in einer bevorzugten Ausführungsform. In dieser Ausführungsform besteht die Mikroskopierhilfe im Wesentlichen aus einem plattenförmigen Körper 3 mit einer Deckfläche 13 und einer Bodenfläche 14, wobei die Deckfläche 13 und die Bodenfläche 14 parallel zu einander ausgerichtet sind. Der Abstand 5 zwischen diesen beiden Flächen 13 und 14 beträgt typischerweise 0,2mm bis 0,7mm. Wie anhand der Draufsicht erkennbar ist, sind die Deckfläche 13 und die Bodenfläche 14 kreisförmig ausgebildet. Der Mittelpunkt 7 dieser Flächen 13 und 14 ist in der Fig. 2a (und in den Fig. 5 bis 8) durch ein sich in einem Kreis befindliches Kreuz gekennzeichnet. Insgesamt gesehen weist die Mikroskopierhilfe 3 in dieser Ausführungsform die Form eines geraden Zylinders mit der Höhe 5 auf. Der Durchmesser 6 der beiden Flächen 13 und 14 des Zylinders liegt zwischen 5mm und 2 mm und beträgt vorzugsweise 5mm, 10mm, 13mm, 15mm, 20mm oder 25mm.

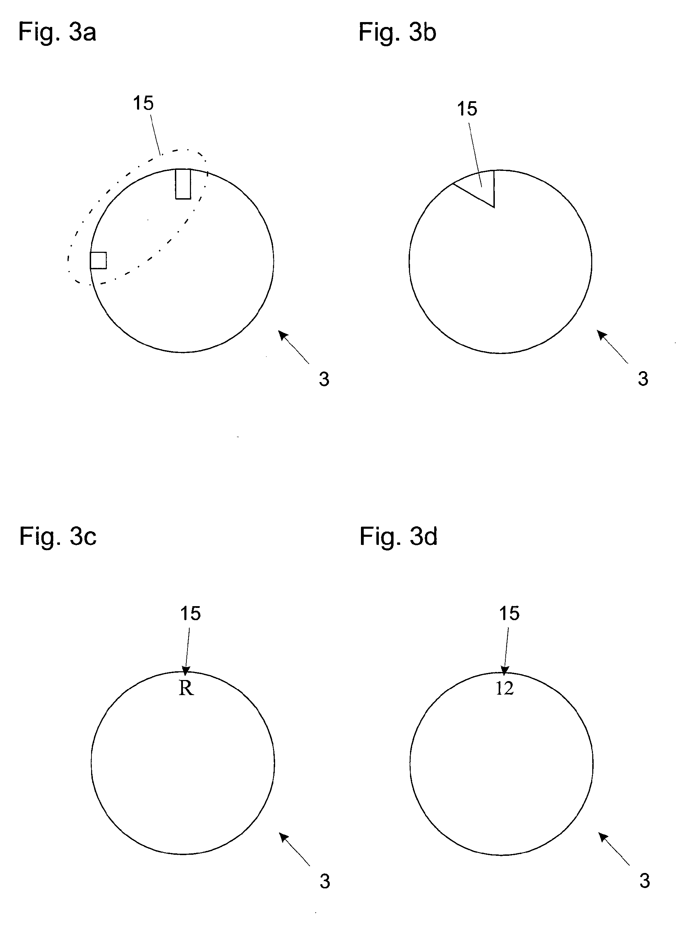

Zur Orientierung bzw. räumlichen Ausrichtung der Mikroskopierhilfe 3 relativ zu dem Träger 2 ist es vorteilhaft, wenn die Mikroskopierhilfe 3 eine makroskopische Markierung aufweist. Die Größe dieser makroskopischen Markierung beträgt 1 mm bis 2mm. In den Fig. 3a bis 3d sind vier verschiedene Ausführungsformen einer solchen makroskopischen Markierung 15 gezeigt: Es kann sich dabei, wie im Falle der Fig. 3a und 3b, um eine oder mehrere geometrische Figuren handeln. Die makroskopische Markeierung kann ergänzend oder alternativ, wie im Falle der Fig. 3c und 3d, ein oder mehrere alphanumerische Zeichen umfassen. Ein all diesen Ausführungsformen innewohnendes Grundmerkmal der makroskopischen Markierung 15 besteht darin, dass sie asymmetrisch ausgebildet ist, sodass ein Nutzer sofort erkennen kann, ob die Deckfläche der Mikroskopierhilfe 3 nach oben zeigt, also ihm zugewandt ist, oder nicht. Ein weiterer großer Vorteil dieser makroskopischen Markierungen 15 besteht darin, dass ein Nutzer durch sie in die Lage versetzt wird, die Mikroskopierhilfen immer in der gleichen Weise relativ zu dem Träger 2 (vergleiche Fig. 1 a) auszurichten und das ohne Zuhilfenahme eines Mikroskops, nur mit dem bloßen Auge. Bezüglich der Fig. 3a und 3b sei noch angemerkt, dass die gezeigten geometrischen Figuren leer oder mit einer Farbe gefüllt sein können.

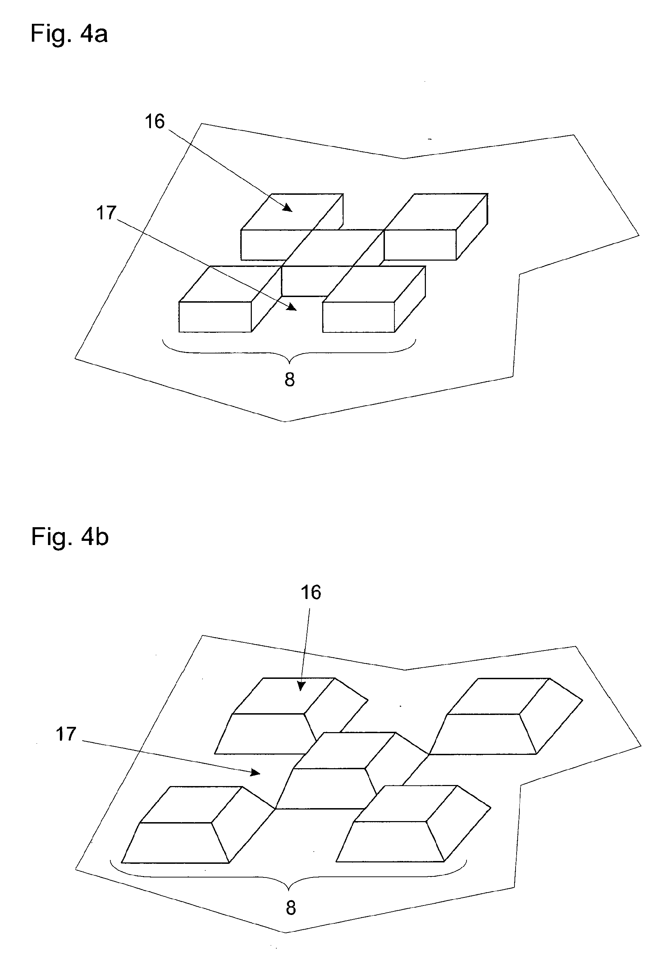

In den Fig. 4a und 4b ist eine Möglichkeit dargestellt, den Kontrast der an einer Oberfläche des plattenförmigen Körpers angeordneten gitterförmigen Struktur 8, die in den Fig. 1 a bis 3d der Übersichtlichkeit halber weggelassen wurde, zu erhöhen. Und zwar ist das dadurch möglich, dass die gitterförmige Struktur 8 in der Form eines Hoch-Tief-Schachbrettes aus Erhebungen 16 und dazwischen liegenden ebenen Flächen 17 ausgebildet ist, wobei es sich bei den in der Fig. 4a zu sehenden Erhebungen 16 um quaderförmige Erhebungen und bei den in der Fig. 4b zu sehenden Erhebungen 16 um pyramidenstumpfförmige Erhebungen handelt. Eine derartige Kontrasterhöhung vereinfacht die Untersuchung der Zellen die sich auf den einzelnen Feldern, sprich auf den Erhebungen 16oder den dazwischen liegenden Flächen 17, befinden.

In den Fig. 5 bis 8 sind fünf bevorzugte Ausführungsformen der an der Oberfläche des plattenförmigen Körpers 3 angeordneten gitterförmigen Strukturen 8 in einer im Vergleich zu den vorausgehenden Zeichnungen vergrößerten Ansicht schematisch dargestellt. Allgemein ist festzuhalten, dass die gitterförmigen Strukturen 8 aus rechteckigen und/oder quadratischen Feldern 9 zusammengesetzt sind.

Im Falle des in der Fig. 5 dargestellten Ausführungsbeispiels betragen die Längen 18 und 19 der Seiten dieser Felder 9 250µm bzw. 125µm. Es ergeben sich hier drei unterschiedlich große Felder 9, deren Zusammensetzung sich immer wieder wiederholt, was anhand der gestrichelten Linien angedeutet sei. Jeder dieser Bereich 8 des plattenförmigen Körpers hat ein 4:3 Format und besteht aus acht großen Quadraten, zwölf kleinen Quadraten und zwei rechteckigen Feldern 9. Jedem dieser Bereiche 8 ist eine mikroskopische Markierung 10 zur Kenntlichmachung der Position relativ zum Mittelpunkt des plattenförmigen Körpers 3 zugeordnet. Sie weist eine Größe von ca. 100 - 200µm auf, ist aus jeweils drei alphanumerischen Zeichen zusammengesetzt und befindet sich jeweils in einer Ecke der Bereiche bzw. der gitterförmigen Strukturen 8. Die römische Ziffer I - IV gibt die Zugehörigkeit zu einem der vier Quadranten der Kreisfläche an, die arabische Ziffer 1, 2, 3, usw. markiert die Nummer der Spalte, in welcher sich eine gitterförmige Struktur 8 befindet, wobei diese Nummer mit dem Abstand von dem Mittelpunkt zunimmt. Der Buchstabe A, B, C, usw. gibt die Zeile an, in welcher sich eine gitterförmige Struktur 8 befindet, wobei ein im Alphabet weiter hinten gereihter Buchstabe bedeutet, dass sich die Zeile bzw. damit die gitterförmige Struktur 8 weiter vom Mittelpunkt entfernt befindet als eine gitterförmige Struktur mit dem Buchstaben A. Durch die mikroskopischen Markierungen 10 wird der Nutzer also dazu in die Lage versetzt, direkt in der Detailvergrößerung zu erkennen, wo sich eine gitterförmige Struktur 8 in Bezug auf das Zentrum der Mikroskopierhilfe 3 befindet. Des Weiteren weiß er, in welchem der vier Quadranten sich die Gitterstruktur 8 befindet.

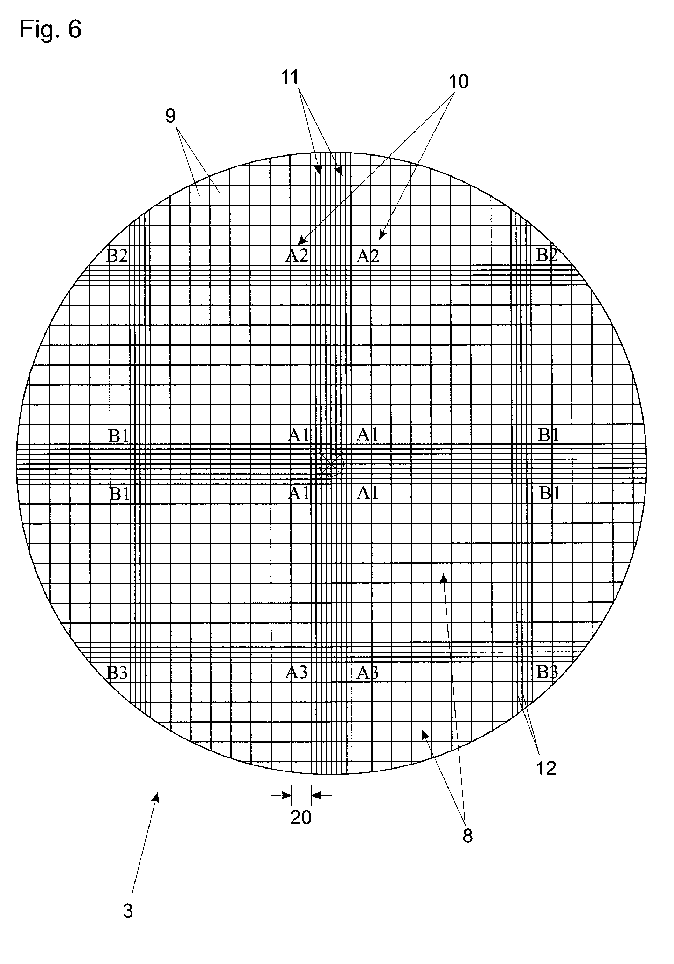

Fig. 6 zeigt eine weitere bevorzugte Ausführungsform der Mikroskopierhilfe 3. In diesem Fall sind die gitterförmigen Strukturen 8 deutlich durch Trennfelder 11 bzw. durch diese Felder 11 verlaufenden Trennlinien 12 voneinander getrennt. Jeder der Bereiche 8 umfasst 8 x 8 quadratische Felder 9 mit einer Kantenlänge 20 von 125µm, sodass jeder der Bereiche 8 eine Grundfläche von 1 mm² aufweist. Zur Kenntlichmachung der Position der gitterförmigen Strukturen 8 in Bezug auf den Mittelpunkt der Mikroskopierhilfe 3, ist jeder der gitterförmigen Strukturen 8 eine mikroskopische Markierung 10 zugeordnet, die in diesem Fall aus einer Kombination aus einem Buchstaben und einer arabischen Ziffer besteht. Die Logik der Kombination des Buchstabens und der Ziffer ist die gleiche wie bei dem in der Fig. 5 gezeigten Ausführungsbeispiel. Im Prinzip ist darüber hinaus auch hier ein Nutzer dazu in der Lage, einen Bezug zu einem der vier Quadranten der Kreisfläche herzustellen und zwar über die Tatsache in welcher Ecke der Bereiche 8 die mikroskopische Markierung 10 angeordnet ist. Sie ist nämlich jeweils immer in derjenigen Ecke angeordnet, deren Abstand zum Mittelpunkt der Mikroskopierhilfe 3 am kleinsten ist.

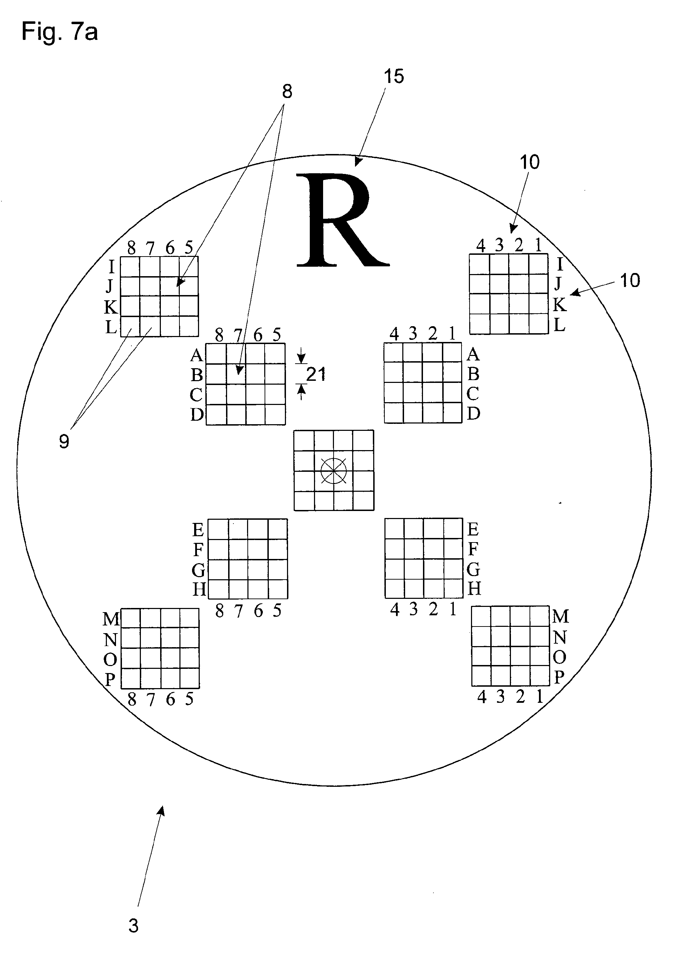

Die in der Fig. 7a schematisch dargestellte Ausführungsform umfasst neun Bereiche 8, deren gitterförmige Struktur jeweils aus acht quadratischen Feldern 9 mit einer Kantenlänge 21 von 200µm zusammengesetzt ist. Es ist erkennbar, dass ein Teil der Bereiche 8 des plattenförmigen Körpers mit mikroskopischen Markierungen 10 in Form eines Koordinatensystems gekennzeichnet ist. Diese mikroskopischen Markierungen 10 sind nur unter dem Mikroskop erkennbar. Gleichzeitig weist die Mikroskopierhilfe 3 aber auch noch eine makroskopische Markierung 15 in Form eines "R"s (vergleiche Fig. 3c) auf, die mit bloßem Auge erkennbar ist, und welche der Orientierung der Mikroskopierhilfe 3 relativ zu einem äußeren Bezugssystem dient. An Stelle des "R"s könnte auch eine andere makroskopische Markierung 15 (vergleiche Fig. 3a, 3b oder 3d) verwendet werden. Dies gilt auch für die anderen, in den Fig. 5, 6 und 8 dargestellten Ausführungsformen, bei denen die makroskopische Markierung der Übersichtlichkeit halber weggelassen wurde.

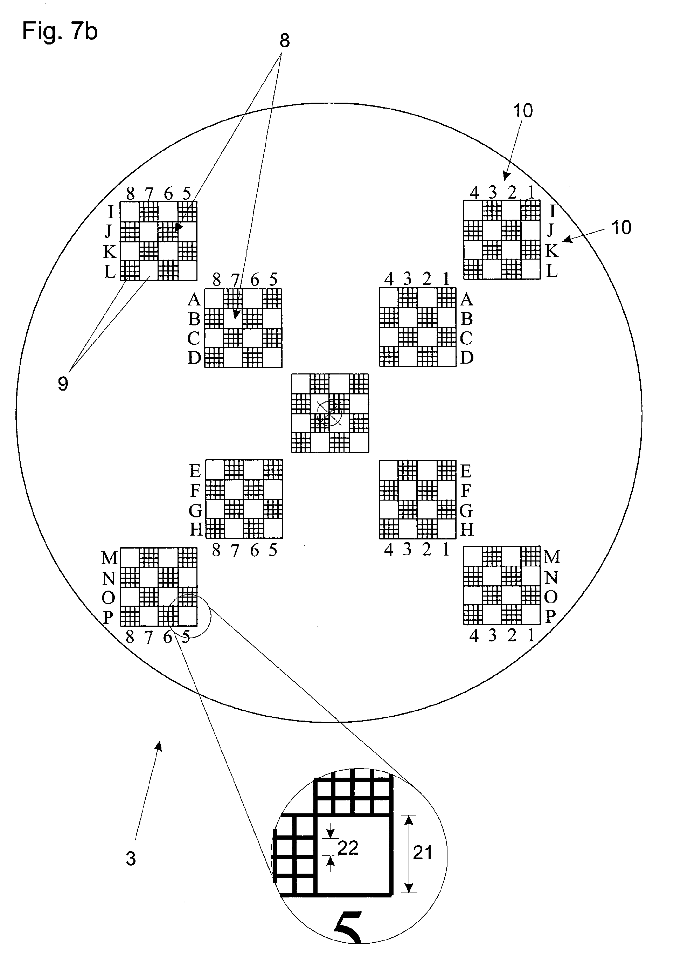

Die Ausführungsform gemäß der Fig. 7b unterscheidet sich von derjenigen Ausführungsform, die in der Fig. 7a dargestellt ist, darin, dass jedes zweite Feld der Bereiche 8 noch einmal in sechzehn kleinere Felder 9 mit einer Kantenlänge 22 von 25µm unterteilt ist. Insgesamt betrachtet, ergibt sich auf diese Weise eine Art Schachbrettmuster.

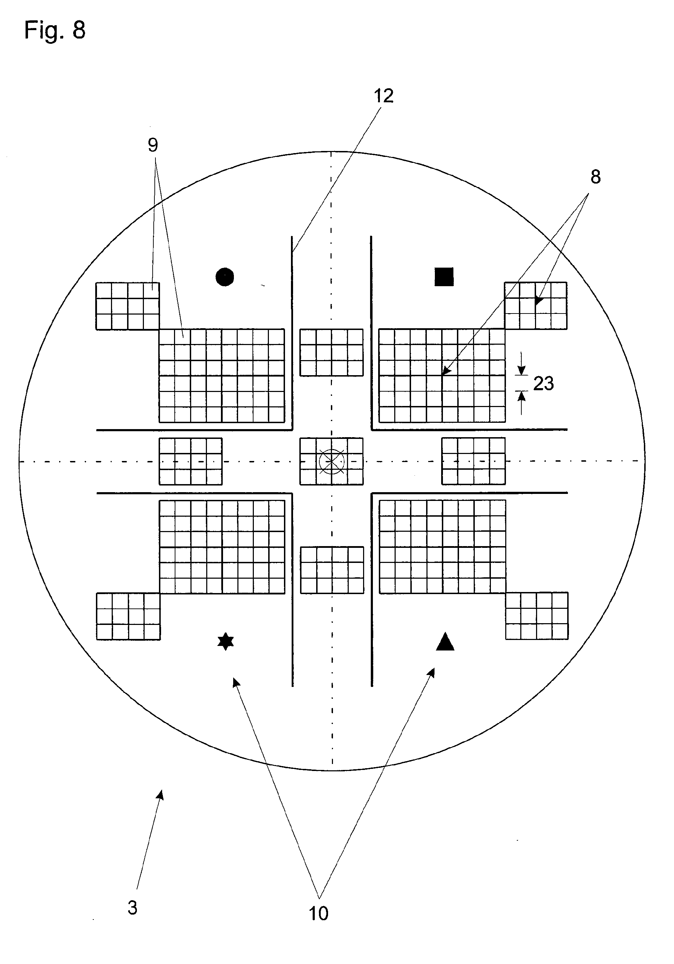

Die in der Fig. 8 schematisch dargestellte Ausführungsform der erfindungsgemäßen Mikroskopierhilfe 3 umfasst neun kleine Bereiche mit einer gitterförmigen Struktur 8 und vier große Bereich mit einer gitterförmigen Struktur 8, wobei die kleinen Bereiche z.B. zum Zählen von Zellen verwendet werden können, und sich die großen Bereich z.B. zur Durchführung von Zellmigrationsstudien eignen. Die Bereiche 8 sind räumlich und zusätzlich dazu auch noch durch Trennlinien 12 voneinander getrennt. Dabei ist jeweils ein großer und ein kleiner Bereich einem Quadranten der Kreisscheibe zugeordnet. Die vier Quadranten sind durch jeweils eine mikroskopische Markierung 10 in Form einer geometrischen Figur gekennzeichnet. Die Kantenlänge 23 der Felder 9 beträgt 250µm.

## Patentansprüche

1. Mikroskopierhilfe für Untersuchungen von Zellen, mit einem plattenförmigen Körper (3) aus einem transparenten Material und mikroskopischen Markierungen (10) zur Kennzeichnung einzelner Bereiche (8) des plattenförmigen Körpers (3) in einer Detailvergrößerung, **dadurch gekennzeichnet, dass** die Mikroskopierhilfe zusätzlich wenigstens eine makroskopische Markierung (15) zur Orientierung der Mikroskopierhilfe relativ zu einem äußeren Bezugssystem (2) aufweist.

2. Mikroskopierhilfe nach Anspruch 1, **dadurch gekennzeichnet, dass** die wenigstens eine makroskopische Markierung (15) wenigstens ein alphanumerisches Zeichen und/oder wenigstens eine geometrische Figur umfasst.

3. Mikroskopierhilfe nach Anspruch 1 oder 2, **dadurch gekennzeichnet, dass** die wenigstens eine makroskopische Markierung (15) asymmetrisch ausgebildet ist.

4. Mikroskopierhilfe nach einem der Ansprüche 1 bis 3, **dadurch gekennzeichnet, dass** die wenigstens eine makroskopische Markierung (15) eine Größe im Millimeter-Bereich aufweist.

5. Mikroskopierhilfe nach einem der Ansprüche 1 bis 4, **dadurch gekennzeichnet, dass** der plattenförmige Köper (3) eine Deckfläche (13) und eine Bodenfläche (14) aufweist, wobei die Deckfläche (13) und die Bodenfläche (14) im Wesentlichen parallel zueinander ausgerichtet sind.

6. Mikroskopierhilfe nach Anspruch 5, **dadurch gekennzeichnet, dass**
- die Deckfläche (13) und die Bodenfläche (14) einen Abstand (5) von 0,2mm bis 0,7mm aufweisen, und/oder
- die Deckfläche (13) und die Bodenfläche (14) im Wesentlichen kreisförmig, ausgebildet sind, wobei die Deckfläche (13) und die Bodenfläche (14) bevorzugt einen Durchmesser (6) von 5mm bis 25mm, besonders bevorzugt einen Durchmesser (6) von 5mm, 10mm, 13mm, 15mm, 20mm oder 25mm, aufweisen.

7. Mikroskopierhilfe nach einem der Ansprüche 1 bis 6, **dadurch gekennzeichnet, dass** der plattenförmige Köper (3) im Wesentlichen aus einem transparenten Kunststoff, vorzugsweise aus Polystyrol, Polycarbonat, einem Cyclo-Olefin-Copolymer oder Polymethylpenten, besteht.

8. Mikroskopierhilfe nach einem der Ansprüche 1 bis 7, **dadurch gekennzeichnet, dass**
- die mikroskopischen Markierungen (10) alphanumerische Zeichen und/oder geometrische Figuren umfassen, und/oder
- die mikroskopischen Markierungen (10) eine Größe im Mikrometer-Bereich aufweisen.

9. Mikroskopierhilfe nach einem der Ansprüche 1 bis 8, **dadurch gekennzeichnet, dass** der plattenförmige Körper (3) einen Mittelpunkt (7) aufweist und mittels der mikroskopischen Markierungen (10) ein Bezug zum Mittelpunkt (7) des plattenförmigen Körpers (3) in der Detailvergrößerung herstellbar ist.

10. Mikroskopierhilfe nach einem der Ansprüche 1 bis 9, **dadurch gekennzeichnet, dass** die mittels der mikroskopischen Markierungen (10) gekennzeichneten Bereiche (8) des plattenförmigen Körpers (3) an einer Oberfläche (13, 14) des plattenförmigen Körpers (3) angeordnet sind.

11. Mikroskopierhilfe nach einem der Ansprüche 1 bis 10, **dadurch gekennzeichnet, dass** die mittels der mikroskopischen Markierungen (10) gekennzeichneten Bereiche (8) des plattenförmigen Körpers (3) räumlich, durch Trennfelder (11) und/oder durch Trennlinien (12) voneinander getrennt sind.

12. Mikroskopierhilfe nach einem der Ansprüche 1 bis 11, **dadurch gekennzeichnet, dass** die Bereiche (8) des plattenförmigen Körpers (3) in rechteckige und/oder quadratische Felder (9) unterteilt sind, wobei die rechteckigen und/oder quadratischen Felder (9) bevorzugt Seiten (18, 19, 20, 21, 22, 23) mit einer Länge von ≤ 250µm aufweisen.

13. Mikroskopierhilfe nach einem der Ansprüche 1 bis 12, **dadurch gekennzeichnet, dass** die Bereiche (8) des plattenförmigen Körpers (3) in der Form eines Hoch-Tief-Schachbretts aus vorzugsweise quaderförmigen oder pyramidenstumpfförmigen Erhebungen (16) und dazwischen liegenden ebenen Flächen (17) ausgebildet sind.

14. Mikroskopierhilfe nach einem der Ansprüche 1 bis 13, **dadurch gekennzeichnet, dass**
- wenigstens eine Oberfläche (13, 14) des plattenförmigen Körpers (3) zumindest bereichsweise angeätzt ist, und/oder
- wenigstens eine Oberfläche (13, 14) des plattenförmigen Körpers (3) zumindest bereichsweise sterilisiert ist.

15. Anordnung (1) aus wenigstens einer Mikroskopierhilfe nach einem der Ansprüche 1 bis 14 und einem Träger (2), wobei der Träger (2) zumindest bereichsweise aus einem transparenten Material besteht, und wenigstens eine Ausnehmung (4) zur Aufnahme der wenigstens einen Mikroskopierhilfe aufweist.
